# EUROPÄISCHE PATENTSCHRIFT

(11) **EP 2 593 204 B1**
(45) Veröffentlichungstag und Bekanntmachung des Hinweises auf die Patenterteilung: **24.07.2019**
(21) Anmeldenummer: 11722089.7
(22) Anmeldetag: 31.05.2011
(51) Int. Cl.: B01D 29/41, B01D 29/11, B01D 29/96

(54) **FILTERMODUL FUER DEN EINMALGEBRAUCH SOWIE EIN VERFAHREN ZUR HERSTELLUNG UND DIE VERWENDUNG EINES SOLCHEN FILTERMODULS**
DISPOSABLE FILTER MODULE AND METHOD FOR PRODUCING SAID DISPOSABLE FILTER MODULE AND USE OF SUCH A DISPOSABLE FILTER MODULE
FILTRE MODULE À USAGE UNIQUE ET PROCÉDÉ DE PRODUCTION D'UN TEL FILTRE MODULE ET UTILISATION D'UN TEL FILTRE MODULE

(30) Priorität: 16.07.2010 EP 10169860
(43) Veröffentlichungstag der Anmeldung: 22.05.2013
(73) Patentinhaber: Filtrox AG, 9000 St. Gallen (CH)
(72) Erfinder: LOSER, Werner, CH-9242 Oberuzwil (CH)
(74) Vertreter: Hepp Wenger Ryffel AG
(86) Internationale Anmeldenummer: PCT/EP2011/058897
(87) Internationale Veröffentlichungsnummer: WO 2012/007222

(56) Entgegenhaltungen:
- WO-A1-02/070102
- DE-A1- 10 150 273
- DE-B3-102007 004 114
- GB-A- 2 176 126
- US-A1- 2004 178 137

## Beschreibung

Die vorliegende Erfindung liegt auf dem Gebiet der Filtrationstechnik. Sie betrifft insbesondere ein Filtermodul für den Einmalgebrauch, sowie ein Verfahren zur Herstellung und die Verwendung eines solchen Filtermoduls mit den Merkmalen des Oberbegriffes der unabhängigen Patentansprüche.

Insbesondere in der chemischen, pharmazeutischen und biotechnischen Industrie hat sich in letzter Zeit ein Trend dahin entwickelt, dass alle Prozessschritte in so genannten "disposables", also Wegwerfprodukten ausgeführt werden. Dadurch entfallen die kostspielige und aufwendige Reinigung, sowie deren Validierung und die Gefahr einer Kreuzkontamination wird verringert. Filtermodule für solche Anwendungen können beispielsweise eine flexible Hülle aufweisen, welche das Filtergehäuse bildet. Filtermodule für den Einmalgebrauch mit flexibler Hülle sind insbesondere dort anzutreffen, wo eine grosse Filterfläche zur Verfügung gestellt werden muss, um eine akzeptable Durchflussrate zu erhalten. Durch den Einsatz von Filtermodulen mit flexiblen Hüllen mit meist geringer Wandstärke kann erheblich Material gegenüber Filtermodulen mit starren Hüllen eingespart werden.

Beispielsweise zeigt WO 2009/132864 A1 solche Einwegfiltermodule. Diese Filtermodule weisen eine flexible verschlossene Hülle auf. In der Hülle sind scheibenförmige Filterelemente angeordnet. Um diese Filtermodule unter hohem Druck einsetzen zu können, werden die Filtermodule in einen speziellen Positionierrahmen eingebracht, welche die Position, die Ausrichtung und die räumliche Grösse des Filtermoduls definiert. Da zum Verschliessen der flexiblen Hülle die Hülle wesentlich grösser als benötigt hergestellt werden muss, ist ein Einführen des Filtermoduls in den Positionierrahmen mit erheblichen Schwierigkeiten verbunden. So kann sich beispielsweise beim Einführen des Filtermoduls in einen rohrförmigen Positionierrahmen die Hülle relativ zu den Filterelementen verschieben, was im schlimmsten Fall im Betrieb unter Druck zu einem Riss der Hülle führen kann.

Die WO 02/070102 offenbart ein Filtermodul mit einer flexiblen Hülle zum Einsatz in einem Filtergehäuse. Das Filtergehäuse weist spezielle Adapterelemente auf, um das Filtermodul aufnehmen zu können. Ein Kontrollkanal mündet in den Zwischenraum zwischen Hülle und Gehäuse. Bei Anschliessen eines Überdrucks an den Kontrollkanal kann die Restfiltration begünstigt werden, bei Anlegen eines Unterdrucks kann der Füllvorgang unterstützt werden.

Es ist Aufgabe der Erfindung, die Nachteile des Standes der Technik zu überwinden. Insbesondere soll ein Filtermodul für den Einmalgebrauch zur Verfügung gestellt werden, welches einfach herzustellen und ohne grossen Aufwand in einen entsprechenden Positionierrahmen eingefügt werden kann. Ausserdem soll ein sicherer Betrieb auch unter hohem Druck gewährleistet werden.

Diese Aufgabe wird durch die in den unabhängigen Patentansprüchen definierten Erfindungen gelöst. Weitere Ausführungsformen ergeben sich aus den abhängigen Patentansprüchen.

Ein erfindungsgemässes Filtermodul für den Einmalgebrauch mit einer verschlossenen und wenigstens teilweise flexiblen Hülle als Filtergehäuse umfasst einen Unfiltratraum innerhalb der verschlossenen Hülle, sowie mehrere in der Hülle untergebrachte, scheibenförmige Filterelemente. Die Hülle weist mindestens eine erste Öffnung durch die Hülle zum Unfiltratraum (9) und mindestens eine zweite Öffnung zum Ableiten des Filtrates durch die Hülle auf. Die Filterelemente sind mit ihrem Innenraum mit der zweiten Öffnung verbundenen. Innerhalb der verschlossenen Hülle herrscht erfindungsgemäss ein Unterdruck gegenüber der normalen Atmosphäre der Umgebung. Es versteht sich von selbst, dass dieser Unterdruck nur im Lieferzustand, bzw. während des Einbauens des Filtermoduls in einen Positionsrahmen, bzw. vor Gebrauch oder Inbetriebnahme des Filtermoduls vorhanden ist. Insbesondere ist der Unterdruck nicht mehr während des eigentlichen Filtrationsprozesses vorhanden.

Unter Unterdruck gegenüber der normalen Atmosphäre der Umgebung wird typischerweise ein Druck verstanden, welcher kleiner als 960hPa ist. Bevorzugt beträgt der Druck weniger als 900hPa, besonders bevorzugt weniger als 800hPa. Durch einen gegenüber der normalen Atmosphäre verminderten Druck in der Hülle wird sichergestellt, dass sich die Hülle an die Filterelemente im Innern der Hülle anlegt. Das Filtermodul kann somit einfach in einen Positionierrahmen eingebracht werden, ohne dass sich die Hülle relativ zu den Filterelementen verschiebt.

Es versteht sich von selbst, dass ein solcher Unterdruck nur aufrechterhalten werden kann, wenn die Hülle und die Öffnungen dicht verschlossen oder verschliessbar sind. Hierfür können die Öffnungen spezielle Mittel wie beispielsweise Ventile und/oder Verschlussstopfen aufweisen. Anstelle von Ventilen oder Verschlussstopfen können die Öffnungen auch fix mit Anschlussleitungen verbunden sein, welche dicht verschlossen sind. Um auf Ventile oder Verschlussstopfen verzichten zu können, können solche Anschlussleitungen beispielsweise dicht verschweisst sein. Ausserdem ist die Hülle aus luftdichtem Material gefertigt.

Unter flexibel wird in diesem Zusammenhang verstanden, dass sich ein Bauteil ähnlich einer dünnen Kunststofffolie leicht von Hand biegen und falten lässt, ohne dass es dadurch zum Bruch kommt. Eine flexible Hülle lässt sich bei Nicht-Gebrauch des Filtermoduls problemlos an die Filterelemente falten und anlegen, so dass die Aussenabmessung des Filtermoduls den Aussenabmessungen der eingeschlossenen Filterelemente entspricht. Unter Betriebsdruck und in einem dimensionsbegrenzenden Positionierrahmen wird die Hülle auf die Innenmasse dieses Rahmens aufgefaltet.

Die Hülle kann dehnbar sein, so dass sich diese im Betrieb optimal an die Form eines die Grösse definierenden Positionierrahmens anpassen kann. Selbst bei nicht korrekter Positionierung der Hülle bzw. des Filtermoduls im Positionierrahmen kann dadurch gewährleistet werden, dass die Hülle unter Druck nicht reisst sondern sich entsprechend dehnen kann.

Unter dehnbar wird vorliegend verstanden, dass sich das entsprechende Bauteil unter Zug dehnen lässt, d.h. seine Längenausdehnung verändert. Dabei beträgt die Bruchdehnung des Hüllenmaterials mindestens 10%, vorzugsweise mindestens 20% oder mehr. Eine dehnbare Hülle lässt sich unabhängig von ihrer Form bei Druckbelastung mit dem Betriebsdruck gleichmässig ausdehnen und legt sich von innen an einen dimensionsbegrenzenden Positionierrahmen zur Aufnahme des Filtermoduls an.

Eine flexible Ausgestaltung kann beispielsweise durch eine geeignete Materialwahl und/oder durch eine Reduktion der Wandstärke der Hülle erreicht werden, was sich positiv auf den Materialverbrauch bei der Herstellung niederschlägt. Durch eine geeignete Wahl der Materialien kann sogar eine dehnbare Hülle realisiert werden, welche beispielsweise Druckunterschiede in der Filtrationsanordnung aufnehmen und ausgleichen kann. Dabei beträgt der Betriebsdruck für die Filtration 0 bis 8 bar, vorzugsweise 0.1 bis 2.5 bar. Bei einer dehnbaren Hülle muss die maximale Ausdehnung durch eine umliegende Struktur auf einen Wert unterhalb der Bruchdehnung, vorzugsweise unterhalb der Elastizitätsgrenze eingeschränkt werden. Ein zylinderförmiger Rahmen zur Aufnahme eines Filtermoduls mit einer flexiblen Hülle ist beispielsweise so dimensioniert, dass sein Innendurchmesser maximal 50%, vorzugsweise zwischen 5% und 20% gösser als der Durchmesser der scheibenförmigen Filterelemente des Filtermoduls ist. Dabei weist die Hülle eine Wandstärke von 10µm bis 1000µm, vorzugsweise von 100µm bis 500µm, besonders bevorzugt von 200µm bis 250µm auf.

Es hat sich gezeigt, dass der Raum im Innern der Hülle vorzugsweise evakuiert wird, so dass dieser einen Druck von weniger als 900hPa, besonders bevorzugt weniger als 800hPa aufweist. Mittels eines solchen Unterdrucks kann beispielsweise ein Anwender einfach verifizieren, dass die Hülle dicht ist. Gleichzeitig kann auch einfach kontrolliert werden, ob ein steriles Filter noch steril ist, was insbesondere in pharmazeutischen Anwendungen vorteilhaft ist.

Durch die Verwendung von mehreren Filterelementen in einer gemeinsamen Hülle kann die Durchflussrate bei gleich bleibendem Filtrationsdruck erhöht werden.

Die Filterelemente können Anschwemmfilter, vorzugsweise kombiniert mit Tiefenfiltern sein und einen Anschwemmraum zwischen den einzelnen Filterelementen aufweisen. Dieser Anschwemmraum dient zum Aufbau eines Anschwemmfilterkuchens bei der Anschwemmfiltration.

Unter Anschwemmfiltration wird im Wesentlichen verstanden, dass ein Filterhilfsmittel, beispielsweise Kieselgur, welches eine poröse Filterschicht bildet, auf einem Trägermaterial vor oder während der Filtration angeschwemmt wird. Hierzu kann vor der eigentlichen Filtration das Filterhilfsmittel mit einem separaten Fluid oder mit dem zu filtrierenden Fluid in einer Anschwemmphase eingebracht werden. Optional kann das Filterhilfsmittel auch während der gesamten Filtration mit dem zu filtrierenden Fluid weiter eingebracht werden, so dass der Anschwemmfilterkuchen ständig wächst. Somit kann verhindert werden, dass die poröse Filterschicht durch Schmutzstoffe verstopft wird und dadurch die Durchflussrate abnimmt.

Die Filterelemente sind dabei vorzugsweise so untereinander und von der Hülle beabstandet, dass der Anschwemmraum jedes Filterelementes, welcher die Filterschicht in Richtung zum Unfiltratraum als Hüllkurve in einer Abstand umgibt, nicht mit der Hülle, einem anderen Filterelement oder einem Anschwemmraum eines anderen Filterelementes in Kontakt kommt. Somit wird sichergestellt, dass auch bei maximal aufgebautem Anschwemmfilterkuchen die gesamte Oberfläche des Filterkuchens ausgenutzt und der Durchfluss durch das Filtermodul nicht verringert wird. Der Abstand der Hüllkurve von der Filterschicht, welcher gleichzeitig die maximale Dicke des Anschwemmfilterkuchens oder des Anschwemmraumes darstellt, liegt typischerweise zwischen 5mm und 100mm, insbesondere zwischen 10mm und 50mm und vorzugsweise zwischen 15mm und 25mm. Um eine optimale Filtrationsleistung gewährleisten zu können, wird zwischen den Anschwemmfilterkuchen untereinander und zur umschliessenden Hülle stets ein Freiraum von typischerweise 1mm bis 10mm, vorzugsweise von 1mm bis 5mm sichergestellt. Wird dieser Wert unterschritten, so dass sich die Filterkuchen gegenseitig berühren, sinkt die Durchflussrate bei gleich bleibendem Betriebsdruck und die Filterelemente können durch eine ungleichmässige Druckbelastung deformiert werden. Damit sich die einzelnen Filterelemente durch das Eigengewicht bei voll ausgebautem Anschwemmkuchen nicht verformen, sind diese untereinander, mittels am Umfang angeordneten Distanzhaltern, fixiert.

Die Hülle kann aus mehreren Kunststoffschichten bestehen, vorzugsweise aus Polyethylen (PE), Polypropylen (PP), Polyamid (PA), [Ethylenvinylalkohol]-Copolymer (EVOH), Polysulfon (PSU), Polyethylenterephthalat (PET), Ethylenvinylacetat (EVA), Polycarbonat (PC), Polyvinylidenchlorid (PVdC), Polyolefin und/oder Polyvinylchlorid (PVC). Durch den Einsatz von Kunststoff als Material für die Hülle des Filtermoduls werden besonders effiziente Herstellungsmethoden wie beispielsweise Extrusion, Tiefziehen, usw. ermöglicht, was zu einer Kostenreduktion beim einmaligen Gebrauch führt. Durch einen mehrschichtigen Aufbau können Materialeigenschaften von unterschiedlichen Kunststoffen kombiniert werden. Neben den genannten Materialien sind andere Materialien oder Materialkombinationen ebenfalls denkbar, welche sich durch besondere Materialeigenschaften, wie Umweltverhalten bei Entsorgung, Kosten, Gewicht, Verarbeitbarkeit usw. eignen.

Es hat sich gezeigt, dass die innere Kunststoffschicht vorzugsweise aus PE besteht, da dieses Material durch eine geringe Wasseraufnahme und eine hohe Lösungsmittelbeständigkeit charakterisiert ist. Eine äussere Schicht kann beispielsweise aus PA bestehen, um eine höhere Festigkeit zu gewährleisten.

Die Hülle kann aus zwei flächigen Lagen hergestellt sein. Solche flächigen Lagen können einfach umlaufend zu einer geschlossenen Form verbunden werden. Beispielsweise können die Lagen verschweisst werden. Verschweissen wird in diesem Zusammenhang gleichbedeutend mit Versiegeln verstanden. Dabei können die flächigen Lagen in Form eines Polygons verbunden sein. Solche Formen lassen sich sehr einfach durch gerade Schweissnähte herstellen. Je nach Grösse und Anzahl der Filterelemente werden die beiden Lagen vorzugsweise zu einem Achteck, beispielsweise in etwa parallel zu den Ebenen der Filterelemente, oder zu einem Rechteck, beispielsweise in etwa parallel zu einer Achse durch die Filterelemente verbunden. Die Hülle kann auch aus einer Schlauchfolie hergestellt sein, welche beidseitig zu einer geschlossenen Form verbunden ist. Eine solche Form reduziert die Anzahl der benötigten Schweissnähte.

Ein erfindungsgemässes Verfahren zur Herstellung eines Filtermoduls für den Einmalgebrauch umfasst die Schritte:
a) Bereitstellen von mehreren scheibenförmigen Filterelementen, wobei die Filterelemente einen Innenraum aufweisen und untereinander mittels am Umfang angeordnetn Distanzhaltern fixiert sind,
b) Bereitstellen einer taschenförmigen Hülle mit mindestens einer ersten Öffnung zum Unfiltrateinlass und einer zweiten Öffnung zum Filtratauslass durch die Hülle,
c) Verbinden der zweiten Öffnung mit dem Innenraum der Filterelemente,
d) Einbringen der Filterelemente in die taschenförmige Hülle,
e) Verschliessen der Hülle,
f) Evakuieren der Hülle insbesondere durch mindestens eine der Öffnungen, so dass sich die Hülle an den Filterelementen anlegt,
g) Verschliessen der für die Evakuierung benötigten Öffnungen.

Die Schritte c) und d) können in einer beliebigen Reihenfolge ausgeführt werden. Ebenso ist es denkbar, die Hülle vor dem verschliessen zu evakuieren, wenn die Evakuierung durch eine noch nicht verschlossene Seite erfolgt.

Die Verwendung eines erfindungsgemässen Filtermoduls für die Anschwemmfiltration bietet eine wesentliche Zeitersparnis beim Bestücken von Positionierrahmen, da die flexible Hülle beim Bestücken an den Filterelementen anliegt und sich nicht relativ zu den Filterelementen verschieben kann. Insbesondere bei Anwendungen, welche erhöhten Reinheitsanforderungen genügen müssen, z.B. in der chemischen, pharmazeutischen und biotechnologischen Industrie können somit bekannte Anschwemmfilter in einer Filtrationsanlage eingesetzt werden, ohne dass nach dem Filtrationsvorgang das Filtergehäuse aufwändig gereinigt werden muss, was zudem auch die Validierung eines entsprechenden Reinigungsprozesses erübrigt. Wenn das Filtermodul entsprechend evakuiert ist, kann der Anwender einfach feststellen, ob das Filtermodul luft- und flüssigkeitsdicht von der Umgebung isoliert ist. Eine Kontamination der Anlage durch Fremdstoffe kann entsprechend ausgeschlossen werden.

Anhand von Figuren, welche lediglich Ausführungsbeispiele darstellen, wird die Erfindung im Folgenden näher erläutert. Es zeigen:
- **Figur 1:**: eine schematische Darstellung einer oktagonal verschlossenen Hülle eines erfindungsgemässen Filtermoduls,
- **Figur 2**: eine perspektivische Darstellung des Filtermoduls gemäss Figur 1,
- **Figur 3**: das Filtermodul gemäss Figur 2 im evakuierten Zustand,
- **Figur 4**: eine schematische Darstellung einer rechteckig verschlossenen Hülle eines erfindungsgemässen Filtermoduls,
- **Figur 5**: einen Querschnitt durch das evakuierte Filtermodul gemäss Figur 2 eingebaut in einem Positionierrahmen,
- **Figur 6**: die Darstellung gemäss Figur 5, wobei das Filtermodul nicht mehr evakuiert ist und die Hülle am Positionierrahmen anliegt,
- **Figur 7**: einen Teilbereich eines evakuierten Filtermoduls im Querschnitt, und
- **Figur 8**: den Teilbereich gemäss Figur 5 eines Filtermoduls in bestimmungsgemässem Gebrauch.

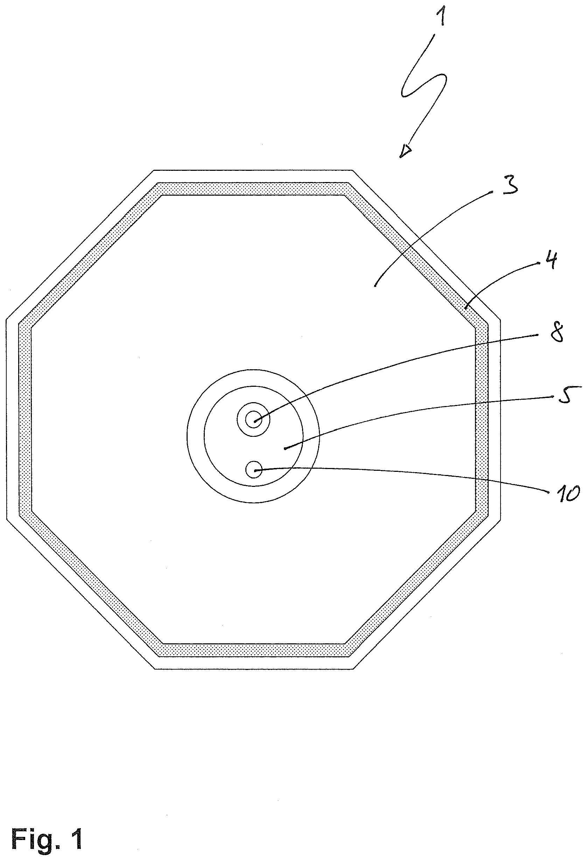

**Figur 1** zeigt eine schematische Darstellung einer oktagonal verschlossenen Hülle 3 eines erfindungsgemässen Filtermoduls 1. Die Hülle 3 besteht aus zwei flächigen Lagen aus einem Kunststoffmaterial. Dabei sind die beiden Lagen durch eine umlaufende Schweissnaht 4 verbunden. Etwa zentral ist ein Anschlusselement 5 angeordnet. Dieses Anschlusselement 5 dient der Positionierung des Filtermoduls 1 in einem Positionierrahmen. Ausserdem beinhaltet das Anschlusselement 5 die Öffnungen 8, 10 zum Unfiltrateinlass und zum Filtratauslass. Optional kann auf der gegenüberliegenden Seite eine zusätzliche Öffnung zur Entlüftung des Untiltratraumes vorgesehen sein. Die Filterelemente, welche im Innern der Hülle 3 angeordnet sind, sind nicht dargestellt.

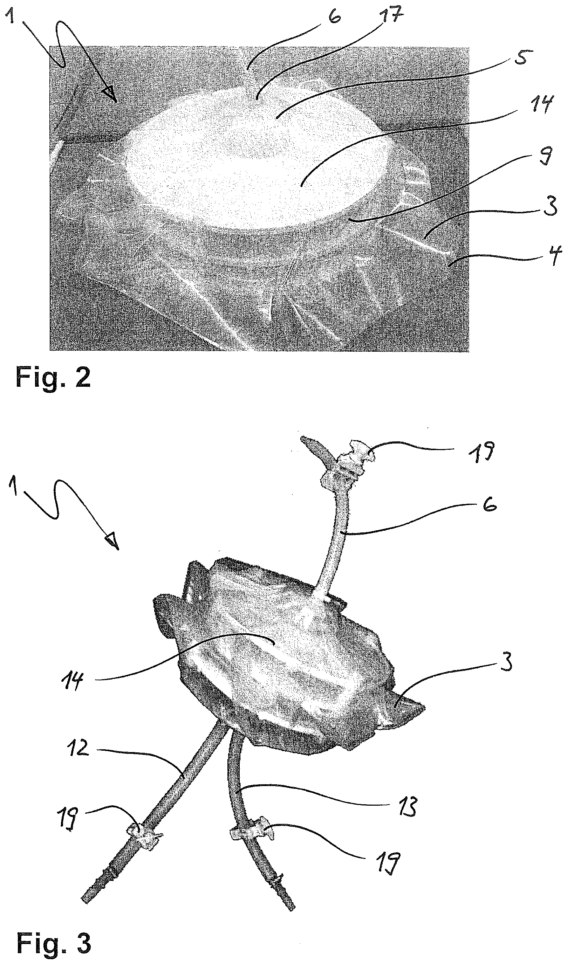

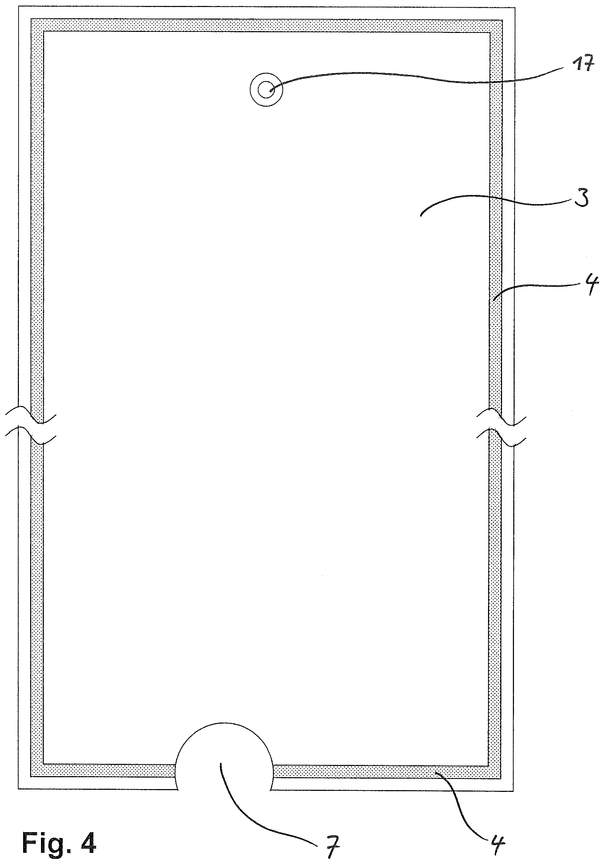

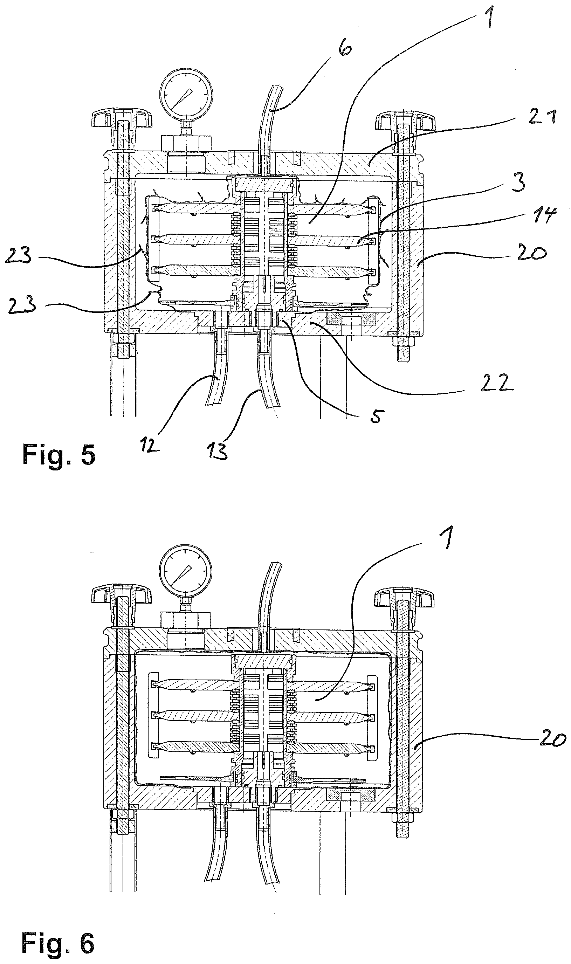

In **Figur 2** ist das Filtermodul 1 aus Figur 1 perspektivisch dargestellt. Die Hülle 3 ist dabei transparent ausgebildet, was jedoch nicht zwingend ist. Umlaufend ist wiederum die Schweissnaht 4 zu erkennen. Das Anschlusselement 5 ist mit einem Schlauch 6 versehen, welcher mit der Entlüftungsöffnung 17 zum Unfiltratraum 9 verbunden ist. Dieser Schlauch 6 dient im Wesentlichen der Entlüftung des Unfiltratraumes 9. Die Öffnungen 8 und 10 (siehe Figur 1) für den Unfiltrateinlass bzw. den Filtratauslass sind nicht sichtbar. Im Innern der Hülle 3 sind im Unfiltratraum 9 drei Filterelemente 14 angeordnet, welche gestapelt und untereinander verbunden sind. Diese Filterelemente 14 weisen auf beiden Seiten je einen Anschwemmraum 16 (siehe Figur 5) auf. Die Hülle besteht aus einem zweischichtigen Kunststoff der Dicke 250µm Dabei besteht die innere Schicht aus einem PE und die äussere Schicht aus PA. Da das gezeigte Filtermodul 1 nur drei Filterelemente 14 besitzt, ist es vorteilhaft, wenn die Hülle 3 wie gezeigt aus zwei Lagen verschweisst ist, welche in etwa parallel zu den Ebenen der Filterelementen 14 angeordnet sind. Zur Herstellung eines Filtermoduls mit einer grösseren Anzahl Filterelementen ist eine Hülle, wie sie in Figur 4 dargestellt ist, eher geeignet.

**Figur 3** zeigt das Filtermodul gemäss Figur 2 im evakuierten Zustand. Der Druck im Innern des Filtermoduls beträgt dabei 800hPa. Deutlich ist zu erkennen, wie die Hülle 3 an den Filterelementen 14 anliegt. Sollte die Hülle 3 wider erwarten vor dem Einsetzen in einen Positionierrahmen beschädigt werden, so ist dies für einen Benutzer leicht zu erkennen, da dann die Hülle 3 nicht mehr an den Filterelementen 14 anliegt. Es stellt sich dann eine Situation ein, wie sie in Figur 2 zu sehen ist.

Weiter zu erkennen sind die Schläuche 12 und 13 für den Unfiltrateinlass und den Unfiltratauslass, welche mit den entsprechenden Öffnungen verbunden sind. Jeder der drei Schläuche 6, 12, 13 ist mit einem Ventil 19 versehen, welches ein dichtes Abklemmen des Schlauches erlaubt.

**Figur 4** zeigt eine schematische Darstellung einer rechteckig verschlossenen Hülle 3 eines erfindungsgemässen Filtermoduls 1. Die Schweissnaht 4 ist wiederum umlaufend ausgebildet und verbindet die beiden flächigen Kunststofflagen. Eine Öffnung 17 ist in der Hülle 3 eingelassen. Für ein Anschlusselement (nicht gezeigt) ist eine Aussparung 7 vorgesehen, in welche das Anschlusselement eingebracht und dicht verbunden werden kann. Ein solches Anschlusselement weist dann wiederum zwei Öffnungen für den Unfiltrateinlass bzw. für den Filtratauslass auf. In einer solchen Hülle 3 werden vorzugsweise die Filterelemente so angeordnet, dass eine Achse durch die Filterelemente in etwa parallel zur längeren Seite der rechteckig verschlossenen Hülle 3 verläuft.

**Figur 5** zeigt einen Querschnitt durch das evakuierte Filtermodul 1 gemäss Figur 2, eingebaut in einem Positionierrahmen 20. Deutlich zu erkennen ist, dass die Hülle 3 an den Filterelementen 14 anliegt. Die Hülle bildet dabei Falten 23, welche den Einbau jedoch nicht behindern. Der Positionierrahmen 20 ist deutlich grösser ausgebildet, als dies die Filterelemente 14 benötigen würden. Ausserdem weist der Positionierrahmen 20 einen Verschlussdeckel 21 und einen Boden 22 auf. Zum Einbringen des Filtermoduls 1 kann der Verschlussdeckel 21 gelöst und somit der Positionierrahmen 20 geöffnet werden. Das Filtermodul 1 wird so in den Positionierrahmen 21 eingeführt, dass das Anschlusselement 5 mit den beiden Schläuchen 12 und 13 in einer Ausnehmung des Bodens 22 sitzt und die Schläuche 12, 13 so von aussen frei zugänglich sind. Beim Verschliessen des Positionierrahmens 20 wird der Schlauch 6 durch eine Öffnung im Verschlussdeckel 21 geführt, so dass auch der Schlauch 6 von aussen zugänglich ist.

In **Figur 6** ist die Situation gezeigt, wenn das Filtermodul 1 nicht mehr evakuiert ist. Die Hülle 3 liegt nun am Positionierrahmen 20 an, wobei sich die Falten 23 (siehe Figur 5) grösstenteils gelöst haben.

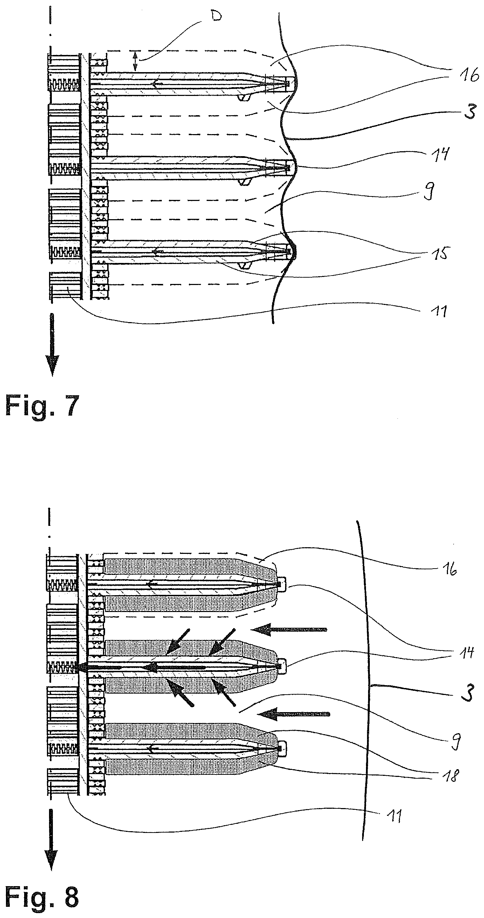

In **Figur 7 und 8** ist ein Teilbereich eines Filtermoduls im Querschnitt dargestellt. Dabei sind in Figur 7 das Filtermodul im evakuierten Zustand und die Filterelemente 14 ohne Anschwemmfilterkuchen gezeigt. Die Hülle 3 liegt an den Filterelementen 14 an und wird sogar teilweise in den Unfiltratraum 9 hineingezogen. Figur 8 dagegen zeigt das Filtermodul im bestimmungsgemässen Gebrauch während der Filtration mit aufgebautem Anschwemmfilterkuchen 18. Die Hülle 3 ist dabei aufgefaltet und liegt am Positionsrahmen (nicht dargestellt) an. Der Anschwemmraum 16 ist in Figur 5 durch die gestrichelte Linie dargestellt. Die Filterelemente 14 sind so untereinander und von der Hülle beabstandet, dass der Anschwemmraum 16 jedes Filterelementes 14, welcher die Filterschicht 15 in Richtung zum Unfiltratraum 9 als Hüllkurve in einer Distanz D umgibt, nicht mit der Hülle, einem anderen Filterelement 14 oder einem Anschwemmraum 16 eines anderen Filterelementes 14 in Kontakt kommt. Diese maximale Distanz D zwischen Filterschicht 15 und Hüllkurve, beziehungsweise diese maximale Dicke des Anschwemmfilterkuchens 18 beträgt im gezeigten Ausführungsbeispiel 20 mm, kann jedoch je nach Anwendung auch anders dimensioniert sein. Idealerweise beträgt der Zwischenraum zwischen zwei benachbarten, komplett angeschwemmten Filterkuchen 18 zwischen 1mm und 5mm. Der Fluss des zu filtrierenden Unfiltrat ist durch die Pfeile in Figur 8 dargestellt. Das Unfiltrat tritt aus dem Unfiltratraum 9 durch den Anschwemmfilterkuchen 18 in das Filterelement 14 ein und wird im Innern des Filterelements 14 zur Filtratableitung 11 geführt. Das Filtrat aus den einzelnen Filterelementen 14 wird in der Filtratableitung 11 gesammelt und zur entsprechenden Öffnung geführt. Die Filterelemente 14 verfügen beidseitig über einen angeschwemmten Filterkuchen 18.

## Patentansprüche

1. Filtermodul (1) für den Einmalgebrauch mit einer dicht verschlossenen und wenigstens teilweise flexibeln, vorzugsweise dehnbaren Hülle (3) als Filtergehäuse, einem Unfiltratraum (9) innerhalb der dicht verschlossenen Hülle (3) und mindestens einer ersten Öffnung (10) durch die Hülle (3) zum Unfiltratraum (9), mindestens einer zweiten Öffnung (8) zum Ableiten des Filtrates durch die Hülle (3) und mehreren in der Hülle (3) untergebrachten, scheibenförmigen Filterelementen (14), deren Innenraum mit der zweiten Öffnung (8) verbunden ist, wobei die Hülle (3) aus einem luftdichten Material besteht und die Öffnungen (8, 10) Mittel aufweisen, so dass diese dicht verschlossen oder verschliessbar sind, **dadurch gekennzeichnet, dass** die einzelnen Filterelemente (14) untereinander mittels am Umfang angeordneten Distanzhaltern fixiert sind, die Öffnungen (8, 10) verschlossen sind und innerhalb der dicht verschlossenen Hülle (3) ein Unterdruck gegenüber der normalen Atmosphäre der Umgebung herrscht, derart, dass die Hülle (3) an den Filterelementen (14) anliegt.

2. Filtermodul (1) für den Einmalgebrauch gemäss Anspruch 1, **dadurch gekennzeichnet, dass** die Filterelemente (14) Anschwemmfilter, vorzugsweise kombiniert mit Tiefenfiltern sind und einen Anschwemmraum (16) zum Aufbau eines Anschwemmfilterkuchens zwischen den einzelnen Filterelementen (14) aufweisen.

3. Filtermodul (1) für den Einmalgebrauch gemäss Anspruch 1 oder 2, **dadurch gekennzeichnet, dass** die Filterelemente (14) so untereinander und von der Hülle (3) beabstandet sind, dass der Anschwemmraum (16) jedes Filterelementes (14), welcher die Filterschicht (15) in Richtung zum Unfiltratraum (9) als Hüllkurve in einer Distanz umgibt, nicht mit der Hülle (3), einem anderen Filterelement (14) oder einem Anschwemmraum (16) eines anderen Filterelementes (14) in Kontakt kommt.

4. Filtermodul (1) für den Einmalgebrauch gemäss Anspruch 3, **dadurch gekennzeichnet, dass** die Distanz zwischen 5 und 100 mm, insbesondere zwischen 10 und 50 mm, vorzugsweise zwischen 15 und 25 mm beträgt.

5. Filtermodul (1) für den Einmalgebrauch gemäss einem der Ansprüche 1 bis 4, **dadurch gekennzeichnet, dass** die Hülle (3) mehrere Kunststoffschichten, vorzugsweise aus der Gruppe PE, PP, PA, EVOH, PSU, PET, EVA, PC, PVdC, Polyolefin und PVC, aufweist, vorzugsweise daraus besteht.

6. Filtermodul (1) für den Einmalgebrauch gemäss Anspruch 5, **dadurch gekennzeichnet, dass** die innerste Kunststoffschicht aus PE besteht.

7. Filtermodul (1) für den Einmalgebrauch gemäss Anspruch 5 oder 6, **dadurch gekennzeichnet, dass** die äusserste Kunststoffschicht aus PA besteht.

8. Filtermodul (1) für den Einmalgebrauch gemäss einem der Ansprüche 1 bis 7, **dadurch gekennzeichnet, dass** die Hülle (3) aus zwei flächigen Lagen hergestellt ist, welche umlaufend zu einer geschlossenen Form verbunden, insbesondere verschweisst sind.

9. Filtermodul (1) für den Einmalgebrauch gemäss Anspruch 8, **dadurch gekennzeichnet, dass** die flächigen Lagen in Form eines Polygons, insbesondere in Form eines Achtecks oder Rechtecks verbunden sind.

10. Filtermodul (1) für den Einmalgebrauch gemäss einem der Ansprüche 1 bis 7, **dadurch gekennzeichnet, dass** die Hülle (3) aus einer Schlauchfolie hergestellt ist, welche beidseitig zu einer geschlossenen Form verbunden, insbesondere verschweisst ist.

11. Verfahren zur Herstellung eines Filtermoduls (1) für den Einmalgebrauch umfassend die Schritte:
- Bereitstellen von mehreren scheibenförmigen Filterelementen (14), wobei die Filterelemente (14) einen Innenraum aufweisen und untereinander mittels am Umfang angeordneten Distanzhaltern fixiert sind,
- Bereitstellen einer taschenförmigen Hülle (3) mit mindestens einer ersten und einer zweiten Öffnung (8, 10) durch die Hülle,
- Verbinden der zweiten Öffnung (10) mit dem Innenraum der Filterelemente (14),
- Einbringen der Filterelemente (14) in die taschenförmige Hülle (3),
- Verschliessen der Hülle (3),
- Evakuieren der Hülle (3), insbesondere durch mindestens eine der Öffnungen (8, 10), so dass sich die Hülle (3) an den Filterelementen (14) anlegt,
- Verschliessen der für die Evakuierung benötigten Öffnungen (8, 10).

## Claims

1. Single-use filter module (1) with a sealed and at least partially flexible, preferably stretchable casing (3) as a filter housing, an unfiltrate space (9) within the sealed casing (3) and at least one first opening (10) through the casing (3) to the unfiltrate space (9), at least one second opening (8) for conducting away the filtrate through the casing (3) and a number of disc-shaped filter elements (14), which are accommodated in the casing (3) and the interior of which is connected to the second opening (8), wherein the casing (3) consists of an airtight material and the openings (8, 10) have means allowing them to be sealed or to be sealable, **characterized in that** the individual filter elements (14) are fixed in relation to one another by means of spacers arranged at the circumference, the openings (8, 10) are closed and a negative pressure in relation to the standard atmosphere of the surroundings prevails within the sealed casing (3) in such a way that the casing (3) lies against the filter elements (14).

2. Single-use filter module (1) according to Claim 1, **characterized in that** the filter elements (14) comprise precoat filters, preferably combined with deep-bed filters, and a precoat space (16) for building up a precoat filter cake between the individual filter elements (14).

3. Single-use filter module (1) according to Claim 1 or 2, **characterized in that** the filter elements (14) are spaced from one another and from the casing (3) in such a way that the precoat space (16) of each filter element (14), which surrounds the filter bed (15) in the direction of the unfiltrate space (9) as an encasing curve at a distance, does not come into contact with the casing (3), another filter element (14) or a precoat space (16) of another filter element (14).

4. Single-use filter module (1) according to Claim 3, **characterized in that** the distance is between 5 and 100 mm, in particular between 10 and 50 mm, preferably between 15 and 25 mm.

5. Single-use filter module (1) according to one of Claims 1 to 4, **characterized in that** the casing (3) comprises, preferably consists of, a number of layers of plastic, preferably from the group PE, PP, PA, EVOH, PSU, PET, EVA, PC, PVdC, polyolefin and PVC.

6. Single-use filter module (1) according to Claim 5, **characterized in that** the innermost layer of plastic consists of PE.

7. Single-use filter module (1) according to Claim 5 or 6, **characterized in that** the outermost layer of plastic consists of PA.

8. Single-use filter module (1) according to one of Claims 1 to 7, **characterized in that** the casing (3) is produced from two sheet-like layers, which are joined around the periphery, in particular welded, to form a closed shape.

9. Single-use filter module (1) according to Claim 8, **characterized in that** the sheet-like layers are joined in the form of a polygon, in particular in the form of an octagon or rectangle.

10. Single-use filter module (1) according to one of Claims 1 to 7, **characterized in that** the casing (3) is produced from a tubular film which is joined, in particular welded, on both sides to form a closed shape.

11. Method for producing a single-use filter module (1) comprising the steps of:
- providing a number of disc-shaped filter elements (14), wherein the filter elements (14) have an interior and are fixed in relation to one another by means of spacers arranged around the circumference,
- providing a pouch-shaped casing (3) with at least one first opening (8) and one second opening (10) through the casing,
- connecting the second opening (10) to the interior of the filter elements (14),
- introducing the filter elements (14) into the pouch-shaped casing (3),
- sealing the casing (3),
- evacuating the casing (3), in particular through at least one of the openings (8, 10), so that the casing (3) comes to lie against the filter elements (14),
- closing the openings (8, 10) required for the evacuation.

## Revendications

1. Module de filtre (1) à usage unique avec une gaine (3) hermétiquement fermée et au moins partiellement flexible, de préférence extensible comme boîtier de filtre, avec une chambre de non-filtrat (9) à l'intérieur de la gaine hermétiquement fermée (3) et avec au moins une première ouverture (10) à travers la gaine (3) vers la chambre de non-filtrat (9), avec au moins une deuxième ouverture (8) pour l'évacuation du filtrat à travers la gaine (3) et avec plusieurs éléments filtrants en forme de disque (14) installés dans la gaine (3), et dont l'espace intérieur est en communication avec la deuxième ouverture (8), dans lequel la gaine (3) se compose d'un matériau imperméable à l'air et les ouvertures (8, 10) présentent des moyens, de telle manière que celles-ci soient ou puissent être hermétiquement fermées, **caractérisé en ce que** les éléments filtrants individuels (14) sont fixés les uns aux autres au moyen d'éléments d'écartement disposés en périphérie, les ouvertures (8, 10) sont fermées et il règne à l'intérieur de la gaine hermétiquement fermée (3) une dépression par rapport à l'atmosphère ambiante normale, de telle manière que la gaine (3) s'applique sur les éléments filtrants (14).

2. Module de filtre (1) à usage unique selon la revendication 1, **caractérisé en ce que** les éléments filtrants (14) sont des filtres à précouche, de préférence combinés avec des filtres de profondeur et présentant un espace de précouche (16) pour la mise en place d'un gâteau de filtre à précouche entre les éléments filtrants individuels (14).

3. Module de filtre (1) à usage unique selon une revendication 1 ou 2, **caractérisé en ce que** les éléments filtrants (14) sont espacés les uns des autres et de la gaine (3) de telle manière que l'espace de précouche (16) de chaque élément filtrant (14), qui entoure à distance la couche filtrante (15) en direction de la chambre de non-filtrat (9) sous forme de courbe enveloppe, ne vienne pas en contact avec la gaine (3), avec un autre élément filtrant (14) ou un espace de précouche (16) d'un autre élément filtrant (14) .

4. Module de filtre (1) à usage unique selon la revendication 3, **caractérisé en ce que** la distance vaut entre 5 et 100 mm, en particulier entre 10 et 50 mm, de préférence entre 15 et 25 mm.

5. Module de filtre (1) à usage unique selon l'une quelconque des revendications 1 à 4, **caractérisé en ce que** la gaine (3) présente plusieurs couches de matière plastique, de préférence du groupe PE, PP, PA, EVOH, PSU, PET, EVA, PC, PVdC, polyoléfine et PVC, ou en est composée.

6. Module de filtre (1) à usage unique selon la revendication 5, **caractérisé en ce que** la couche de matière plastique la plus intérieure est composée de PE.

7. Module de filtre (1) à usage unique selon une revendication 5 ou 6, **caractérisé en ce que** la couche de matière plastique la plus extérieure est composée de PA.

8. Module de filtre (1) à usage unique selon l'une quelconque des revendications 1 à 7, **caractérisé en ce que** la gaine (3) est fabriquée à partir de deux couches plates, qui sont assemblées, en particulier soudées, en enveloppe en une forme fermée.

9. Module de filtre (1) à usage unique selon la revendication 8, **caractérisé en ce que** les couches plates sont assemblées sous la forme d'un polygone, en particulier sous la forme d'un octogone ou d'un rectangle.

10. Module de filtre (1) à usage unique selon l'une quelconque des revendications 1 à 7, **caractérisé en ce que** la gaine (3) est fabriquée à partir d'un film en tuyau souple, qui est assemblé, en particulier soudé, sur les deux côtés en une forme fermée.

11. Procédé de fabrication d'un module de filtre (1) à usage unique, comprenant les étapes suivantes:
- préparer plusieurs éléments filtrants en forme de disques (14), dans lequel les éléments filtrants (14) présentent un espace intérieur et sont fixés les uns aux autres au moyen d'éléments d'écartement disposés en périphérie,
- préparer une gaine en forme de poche (3) avec au moins une première et une deuxième ouvertures (8, 10) à travers la gaine,
- raccorder la deuxième ouverture (10) à l'espace intérieur des éléments filtrants (14),
- introduire les éléments filtrants (14) dans la gaine en forme de poche (3),
- fermer la gaine (3),
- évacuer la gaine (3), en particulier à travers au moins une des ouvertures (8, 10), de telle manière que la gaine (3) s'applique sur les éléments filtrants (14),
- fermer les ouvertures (8, 10) nécessaires pour l'évacuation.
